# EUROPEAN PATENT APPLICATION

(11) **EP 4 621 670 A1**
(43) Date of publication of application: **24.09.2025**
(21) Application number: 22965744.0
(22) Date of filing: 15.11.2022
(51) Int. Cl.: G06Q 10/04, G06V 20/52

(54) **INFORMATION PROCESSING PROGRAM, INFORMATION PROCESSING METHOD, AND INFORMATION PROCESSING DEVICE**

(71) Applicant: Fujitsu Limited, Kawasaki-shi, Kanagawa 211-8588 (JP)
(72) Inventor: SUZUKI, Genta, Kawasaki-shi, Kanagawa 211-8588 (JP); KAWAMURA, Ryosuke, Kawasaki-shi, Kanagawa 211-8588 (JP)
(74) Representative: Hoffmann Eitle
(86) International application number: PCT/JP2022/042364
(87) International publication number: WO 2024/105768

(57) **Abstract**

The information processing apparatus acquires a video when a specific event has occurred. The information processing apparatus specifies a first movement route of a person in a first period contained in the acquired video. The information processing apparatus predicts a second movement route of the person in a second period after the first period based on the first movement route. The information processing apparatus specifies an actual third movement route of the person in the second period by analyzing the acquired video. The information processing apparatus specifies a person related to the specific event from the video based on the second movement route and the third movement route.

## Description

### CROSS-REFERENCE TO RELATED APPLICATION

### Technical Field

The present invention relates to an information processing program and the like.

### Background Art

In order to maintain security, suspicious persons are detected using cameras in public spaces. For example, there is a method in which an operator visually checks a video of a camera to determine whether a suspicious person appears. However, this places a heavy burden on the operator, so there is a demand for automatically detecting a suspicious person.

With regard to such a problem, there is a technology in which behavior patterns of suspicious persons are defined in advance and machine learning models are trained. The behavior patterns of the suspicious persons include a behavior pattern such as leaving a bag behind. By inputting an image to the trained machine learning model, it is possible to automatically determine whether a suspicious person appears in the image of the camera.

### Citation List

### Patent Literature

Patent Literature 1: Japanese Laid-open Patent Publication No. 2017-91416

### Summary

### Technical Problem

However, in the above-described conventional technology, there is a problem that it is not possible to specify a specific person such as a suspicious person from the image of the camera.

For example, the behavioral patterns of suspicious persons are diverse, and it is difficult to prepare training data that including such behavior patterns in advance. Therefore, a machine learning model does not detect a specific person in some cases.

In one aspect, an object is to provide an information processing program, an information processing method, and an information processing apparatus capable of specifying a specific person from a video of a camera. Solution to Problem

According to an aspect of the embodiment of the invention, an information processing program causes a computer to execute the following processing of acquiring a video when a specific event has occurred specifying a first movement route of a person in a first period contained in the acquired video predicting a second movement route of the person in a second period after the first period based on the first movement route specifying an actual third movement route of the person in the second period by analyzing the acquired video and specifying a person related to the specific event from the video based on the second movement route and the third movement route. Advantageous Effects of Invention

A specific person can be specified from an image of a camera.

### Brief Description of Drawings

FIG. 1 is a diagram illustrating an example of a system according to the present embodiment.
FIG. 2 is a diagram for explaining processing of an information processing apparatus according to the present embodiment.
FIG. 3 is a functional block diagram illustrating a configuration of an information processing apparatus according to the present embodiment.
FIG. 4 is a diagram illustrating an example of a data structure of a camera parameter table.
FIG. 5 is a diagram illustrating an example of a data structure of a video buffer.
FIG. 6 is a diagram illustrating an example of a machine learning model.
FIG. 7 is a diagram illustrating an example of a data structure of a movement route table;.
FIG. 8 is a diagram for explaining processing of a specifying unit.
FIG. 9 is a flowchart illustrating a procedure of processing of the information processing apparatus according to the present embodiment.
FIG. 10 is a flowchart illustrating a procedure of suspicious person specifying processing.
FIG. 11 is a flowchart illustrating a procedure of processing of an information processing apparatus in a modification.
FIG. 12 is a diagram for explaining machine learning of a machine learning model for HOID.
FIG. 13 is a diagram for explaining other processing executed by the information processing apparatus.
FIG. 14 is a diagram illustrating an example of a hardware configuration of a computer that realizes functions similar to those of the information processing apparatus according to the embodiment.

### Description of Embodiments

Hereinafter, an information processing program, an information processing method, and an information processing apparatus according to an embodiment disclosed in the present application will be described in detail with reference to the drawings. Note that the present invention is not limited by this embodiment.

### (Embodiment)

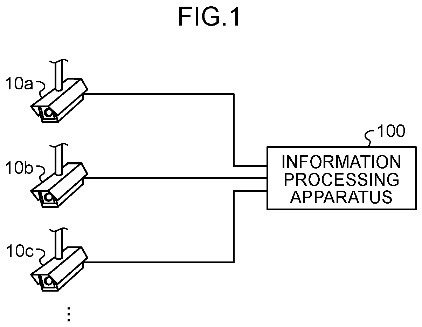

FIG. 1 is a diagram illustrating an example of a system according to the present embodiment. As illustrated in FIG. 1, the system according to the present embodiment includes cameras 10a, 10b, and 10c, and an information processing apparatus 100. The cameras 10a to 10c and the information processing apparatus 100 are connected to each other via a network. Although only the cameras 10a to 10c are illustrated in FIG. 1 for convenience of explanation, the system according to the present embodiment may include other cameras.

The cameras 10a to 10c are installed at predetermined positions in a town, a station, an airport, a shopping center, or the like. The positions (coordinates) at which the cameras 10a to 10c are installed are different from each other. In the following description, the cameras 10a to 10c will be referred to as "camera 10" when they are not particularly distinguished.

The camera 10 captures a video and transmits data of the captured video to the information processing apparatus 100. In the following description, data of the video transmitted from the camera 10 to the information processing apparatus 100 will be referred to as "video data". In the present embodiment, a description will be given using video data in which a person is photographed.

The video data includes a plurality of image frames in time series. Frame numbers are assigned to the respective image frames in chronological ascending order. One image frame is a still image captured by the camera 10 at a certain timing. Time data may be added to each image frame. Camera identification information for identifying the camera 10 that has captured the video data is set in the video data.

The information processing apparatus 100 acquires video data when a specific event has occurred as the video data captured by the camera 10, and predicts a movement route for each person. The information processing apparatus 100 specifies a person having an error larger than or equal to a threshold between the predicted movement route and an actual movement route as a person related to the specific event among a plurality of persons. As a result, a specific person can be specified from the video data. In the following embodiment, for convenience of explanation, the person specified by the information processing apparatus 100 will be referred to as a "suspicious person", but may be any person other than the suspicious person as long as the movement route of the person is influenced by the specific event.

Note that the video data in which the specific event has occurred is video data in which a police officer or a quarantine officer of an airport appears. Alternatively, the video data in which the specific event has occurred is video data containing a bulletin board that may cause the suspicious person to change his or her behavior. The bulletin board that may cause the suspicious person to change his or her behavior is a wanted criminal bulletin board, a drug control bulletin board, or the like. Alternatively, the video data in which the specific event has occurred is video data when an advertisement is displayed on the display of the user terminal. The user terminal is, for example, a terminal such as a digital signage used by a provider of an advertisement posting space (advertising space) or an advertiser. The user terminal receives information output from the information processing apparatus 100 and displays the information on the display. Further, the user terminal notifies the information processing apparatus 100 of a period during which the advertisement is displayed on the display. The user terminal is disposed at a predetermined position in a town, a station, an airport, a shopping center, or the like.

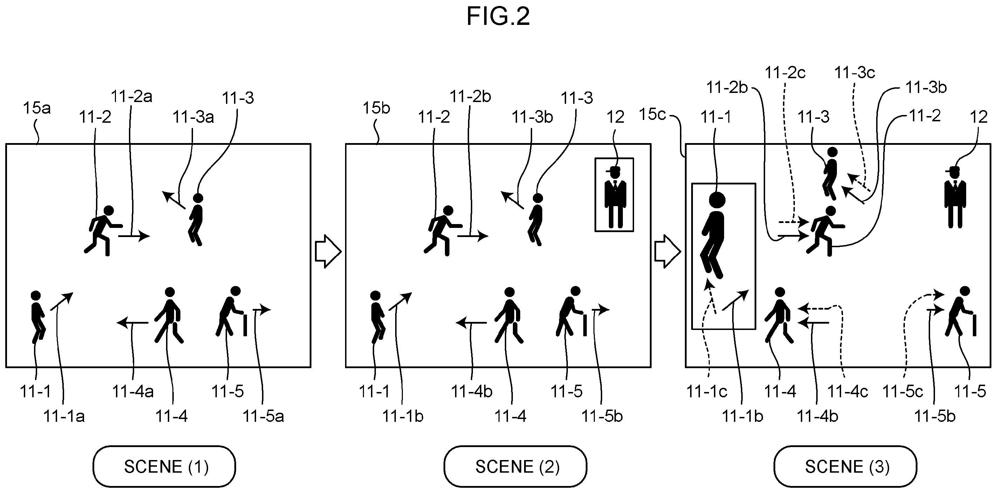

FIG. 2 is a diagram for explaining processing of the information processing apparatus according to the present embodiment. Scenes (1), (2), and (3) in FIG. 2 will be described. It is assumed that scenes (1), (2), and (3) are taken in this order in time series.

Scene (1) will be described. Video data 15a of scene (1) is video data captured by the camera 10, and is video data in which a specific event has not occurred. The video data 15a includes persons 11-1, 11-2, 11-3, 11-4, and 11-5.

The information processing apparatus 100 predicts movement routes of the persons 11-1 to 11-5 after a predetermined period T from the current time based on the video data 15a. For example, the predicted movement route of the person 11-1 is a movement route 11-1a. The predicted movement route of the person 11-2 is a movement route 11-2a. The predicted movement route of the person 11-3 is a movement route 11-3a. The predicted movement route of the person 11-4 is a movement route 11-4a. The predicted movement route of the person 11-5 is a movement route 11-5a.

Scene (2) will be described. Video data 15b of scene (2) is video data captured by the camera 10, and is video data in which a specific event has occurred. The video data 15a includes persons 11-1 to 11-5 and a person 12. The person 12 is a police officer, a drug enforcement officer, or the like.

The information processing apparatus 100 predicts movement routes of the persons 11-1 to 11-5 after the predetermined period T from the current time based on the video data 15b. For example, the predicted movement route of the person 11-1 is a movement route 11-1b. The predicted movement route of the person 11-2 is a movement route 11-2b. The predicted movement route of the person 11-3 is a movement route 11-3b. The predicted movement route of the person 11-4 is a movement route 11-4b. The predicted movement route of the person 11-5 is a movement route 11-5b.

Scene (3) will be described. Video data 15c of scene (3) is video data after the predetermined period T has elapsed from the time of the video data 15b. The video data 15a includes persons 11-1 to 11-5 and a person 12. The actual movement routes of the persons 11-1 to 11-5 from the time when the video data 15b is captured until the predetermined period T has elapsed are set to the following movement routes.

For example, the actual movement route of the person 11-1 is a movement route 11-1c. The actual movement route of the person 11-2 is a movement route 11-2c. The actual movement route of the person 11-3 is a movement route 11-3c. The actual movement route of the person 11-4 is a movement route 11-4c. The actual movement route of the person 11-5 is a movement route 11-5c.

The information processing apparatus 100 specifies the person 11-1 as a suspicious person because the error between the predicted movement route 11-1b and the actual movement route 11-1c of the person 11-1 is larger than or equal to the threshold. For example, the person 11-1 has noticed the person 12 and changed the movement route to avoid the person 12. Therefore, the actual movement route is different from the predicted movement route.

Note that the information processing apparatus 100 does not specify the person 11-2 as a suspicious person because the error between the predicted movement route 11-2b and the actual movement route 11-2c of the person 11-2 is smaller than the threshold. Similarly, the information processing apparatus 100 does not specify the persons 11-3 to 11-5 as suspicious persons because the errors between the predicted movement routes 11-3b to 11-5b of the persons 11-3 to 11-5 and the actual movement routes 11-3c to 11-5c of the persons 11-3 to 11-5 are smaller than the threshold.

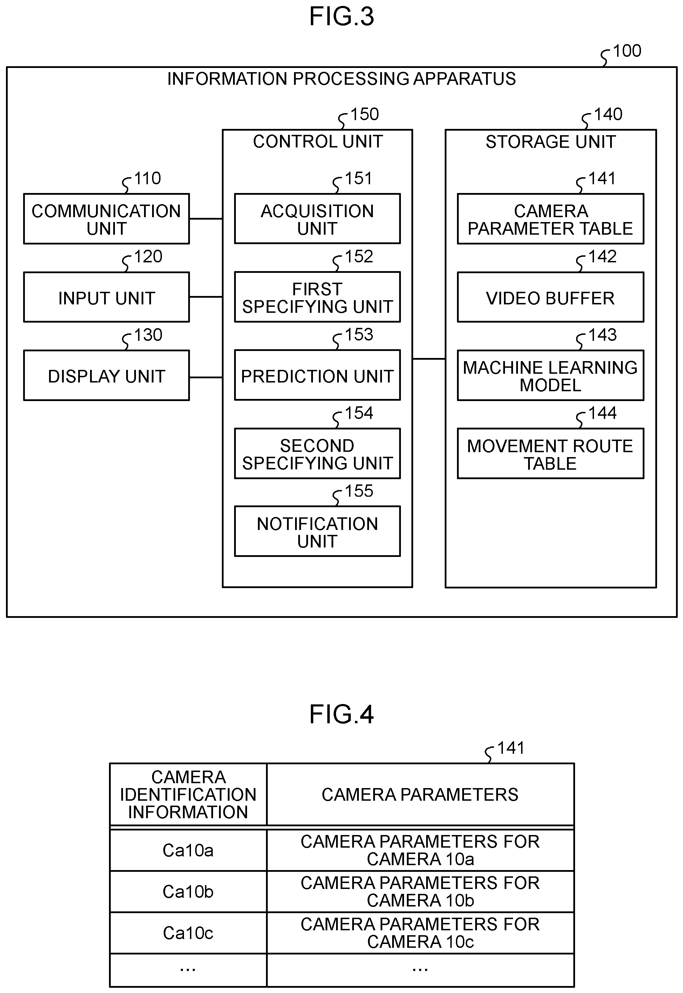

Next, an example of a configuration of an information processing apparatus that executes the processing described with reference to FIG. 2 will be described. FIG. 3 is a functional block diagram illustrating a configuration of the information processing apparatus according to the present embodiment. As illustrated in FIG. 3, the information processing apparatus 100 includes a communication unit 110, an input unit 120, a display unit 130, a storage unit 140, and a control unit 150.

The communication unit 110 executes data communication with the camera 10, an external device, and the like via a network. The communication unit 110 is a network interface card (NIC) or the like. For example, the communication unit 110 receives video data from the camera 10.

The input unit 120 is an input device that inputs various types of information to the control unit 150 of the information processing apparatus 100. For example, the input unit 120 corresponds to a keyboard, a mouse, a touch panel, or the like.

The display unit 130 is a display device that displays information output from the control unit 150. For example, the display unit 130 displays a heat map or the like.

The storage unit 140 includes a camera parameter table 141, a video buffer 142, a machine learning model 143, and a movement route table 144. The storage unit 140 is a storage device such as a memory.

The camera parameter table 141 holds information regarding camera parameters of the camera 10. FIG. 4 is a diagram illustrating an example of a data structure of a camera parameter table. As illustrated in FIG. 4, the camera parameter table 141 associates camera identification information and camera parameters with each other.

The camera identification information is information for identifying the camera 10. For example, the camera identification information for the cameras 10a, 10b, and 10c is Ca10a, Ca10b, and Ca10c, respectively. The camera parameters are camera internal parameters, camera external parameters, and the like. The camera parameters are set in advance based on calibration or the like.

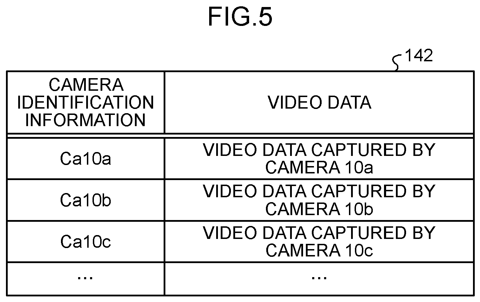

The video buffer 142 holds video data captured by the camera. FIG. 5 is a diagram illustrating an example of a data structure of a video buffer. As illustrated in FIG. 5, the video buffer 142 associates camera identification information and video data with each other. The camera identification information and the video data are similar to those described above.

The machine learning model 143 is a trained machine learning model to which a first movement route in a first period is input and from which a second movement route in a second period is output. The second period is a period following the first period, and the machine learning model 143 predicts a future movement route (second movement route) from the first movement route.

For example, the first period is a period from time t-n to time t. The first movement route is time-series position information of the person in the first period. As the first movement route, time-series positions (coordinates) are set to ((xₜ₋ₙ,yₜ₋ₙ), (xₜ₋ₙ₊₁,yₜ₋ₙ₊₁), ..., (xₜ,yₜ)).

For example, the second period is a period from time t+1 to time t+m. The second movement route is time-series position information of the person in the second period. As the second movement route, time-series positions (coordinates) are set to ((x'ₜ₊₁,y'ₜ₊₁), ..., (x'ₜ₊ₘ,yₜ₊ₘ)). The second movement route is a movement route predicted based on the first movement route.

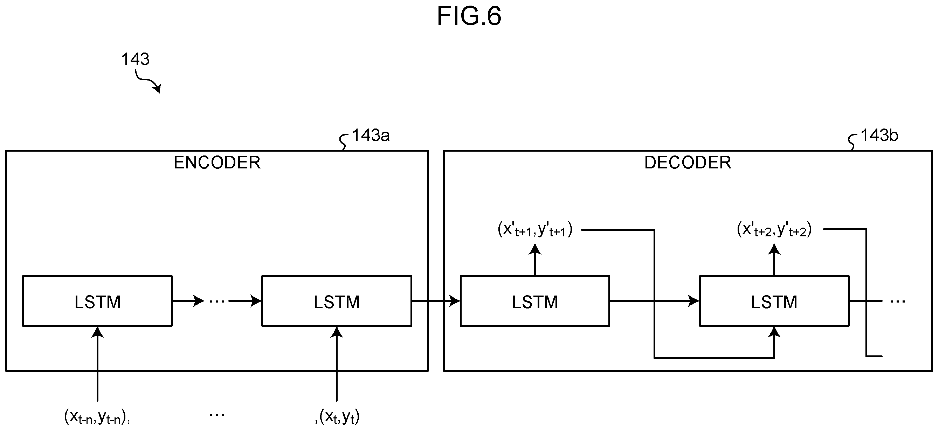

FIG. 6 is a diagram illustrating an example of a machine learning model. As illustrated in FIG. 6, the machine learning model 143 includes an encoder 143a and a decoder 143b. When the position information of the first movement route is input in time series to a long short term memory (LSTM) of the encoder 143a, the information is input to the decoder 143b, and the position information of the second movement route is output in time series from an LSTM of the decoder 143b. In FIG. 6, a case where the machine learning model 143 is realized by the LSTMs has been described, but transformers or the like may be used instead.

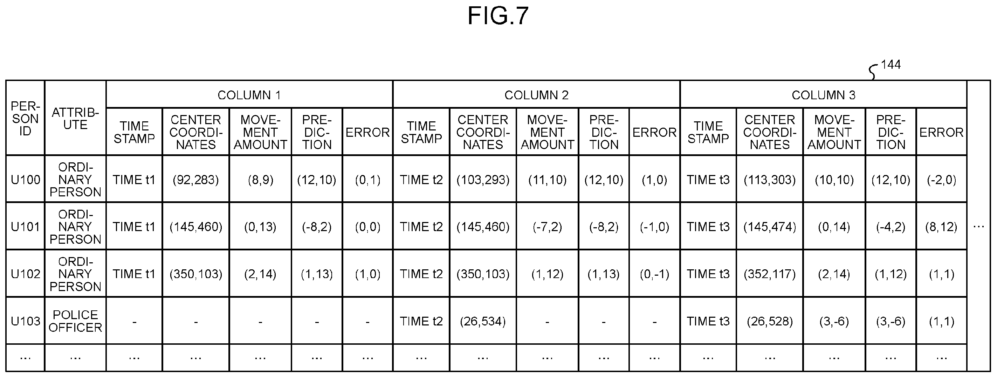

The movement route table 144 holds information on the movement routes of the persons included in the video data. FIG. 7 is a diagram illustrating an example of a data structure of a movement route table. As illustrated in FIG. 7, the movement route table 144 associates a person ID, an attribute, and a plurality of columns with each other. The columns include a time stamp, center coordinates, a movement amount, predicted coordinates, and an error.

The person ID is information for identifying a person extracted from the video data (time-series image frames). The attribute represents an attribute of the person. For example, the attribute includes "ordinary person", "police officer", and the like.

The time stamp is a time of an image frame in which the person is detected. The center coordinates are center coordinates of a bounding box surrounding the person detected from the image frame. The movement amount is an amount of movement from the center coordinates of the person at time tn-1 to the center coordinates of the person at time tn. The prediction is a movement amount predicted at time tn, which is an amount of movement (a predicted amount of movement) from the center coordinates of the person at time tn to the center coordinates of the person at time tn+1. The error is a difference between the prediction at time tn-1 and the movement amount at time tn.

Here, the time-series center coordinates set in the respective columns correspond to the first movement route described above. In addition, the center coordinates obtained by adding the prediction to the center coordinates set in the column at time tn can be said to be center coordinates (predicted center coordinates) at time tn+1, and thus, the time-series center coordinates and predictions set in the respective columns correspond to the second movement route described above.

Referring back to FIG. 3, the description will continue. The control unit 150 includes an acquisition unit 151, a first specifying unit 152, a prediction unit 153, a second specifying unit 154, and a notification unit 155. The control unit 150 is a central processing unit (CPU), a graphics processing unit (GPU), or the like.

The acquisition unit 151 acquires video data from the camera 10. As described above, the camera identification information of the camera 10 that has captured the video data is set in the video data. The acquisition unit 151 stores the video data in the video buffer 142 in association with the camera identification information.

The first specifying unit 152 acquires the video data from the video buffer 142, detects and tracks a person area based on each image frame included in the video data, and specifies a position (coordinates) of the person. The first specifying unit 152 assigns a unique person ID to the same person. In addition, the first specifying unit 152 specifies the attribute of the person based on the detected person area.

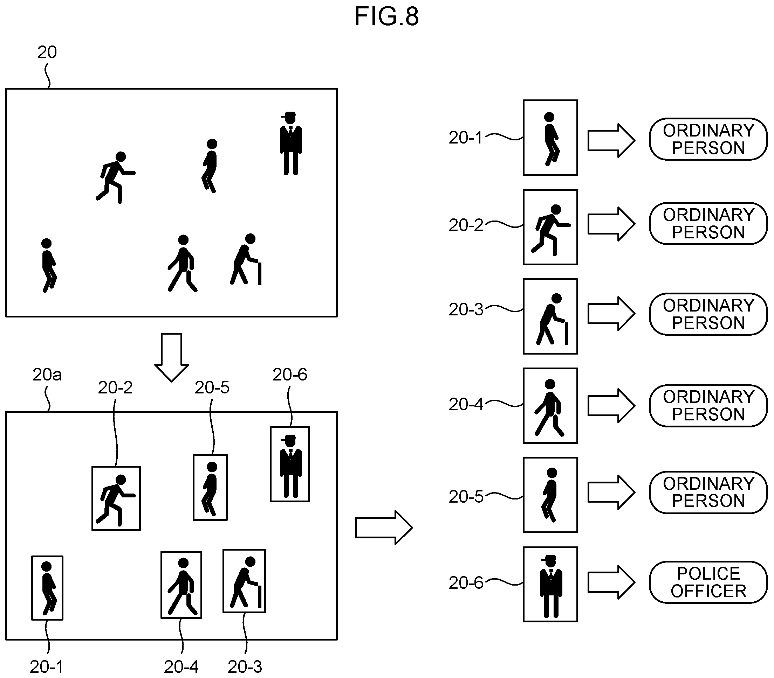

FIG. 8 is a diagram for explaining processing of the specifying unit. In an example illustrated in FIG. 8, an image frame 20 included in the video data will be used for explanation. The first specifying unit 152 obtains a detection result 20a in which each person area is detected by inputting the image frame 20 to an object detector such as You Only Look Once (YOLO). The detection result 20a includes person areas 20-1, 20-2, 20-3, 20-4, 20-5, and 20-6.

The first specifying unit 152 specifies the attributes of the persons by inputting the person areas 20-1 to 20-6 to an identifier such as ResNet. ResNet is a model to which an image of a person area is input and from which the attribute of the person is output. For example, the attribute obtained as the first specifying unit 152 inputs each of the person areas 20-1 to 20-5 to the identifier is "ordinary person". The attribute obtained as the first specifying unit 152 inputs the person area 20-6 to the identifier is "police officer". Since the image frame 20 includes a person area corresponding to the attribute "police officer", the first specifying unit 152 specifies the video data including the image frame 20 as video data in which a specific event has occurred.

The first specifying unit 152 repeatedly executes the above-described processing on the time-series image frames included in the video data. The first specifying unit 152 registers information on the attribute, the time stamp, and the movement amount related to each person ID and specified from each image frame in the movement route table 144. As the time stamp, the time set in the image frame is used.

For example, in the following description of the embodiment, the time (time stamp) of the image frame in which a person area corresponding to the attribute "police officer" is detected first among the image frames included in the video data is set as "reference time". The first period is a period from "a predetermined period before the reference time" to "the reference time". The second period is a period from "the reference time" to "a predetermined period after the reference time".

The time-series center coordinates in the first period specified by the first specifying unit 152 are set as a first movement route. The time-series center coordinates in the second period specified by the first specifying unit 152 are set as a third movement route. The first movement route and the third movement route are movement routes of the person specified based on the video data. The first specifying unit 152 specifies a first movement route and a third movement route for each person ID.

The prediction unit 153 acquires a first movement route corresponding to a certain person ID from the movement route table 144, and inputs the time-series positions (center coordinates) of the acquired first movement route to the machine learning model 143, thereby predicting a second movement trajectory related to the certain person ID in the second period.

The prediction unit 153 specifies prediction (prediction of the movement route table 144) in the second period based on the second movement route, and registers the prediction for each person ID in the movement route table 144. For example, the prediction unit 153 specifies an amount of movement from the coordinates at time tn to the coordinates at time tn+1 for the second movement route as prediction (predicted movement amount).

The prediction unit 153 repeatedly executes the above-described processing for each person ID registered in the movement route table 144.

The second specifying unit 154 specifies whether the person corresponding to the certain person ID is a suspicious person based on the predicted second movement route corresponding to the certain person ID and the third movement route (actual movement route) registered in the movement route table 144. The second specifying unit 154 calculates an error e between an nth position of the second movement trajectory and an nth position of the third movement trajectory. The second specifying unit 154 repeatedly executes the above-described processing for the nth position (n=1 to M), and specifies the person corresponding to the certain person ID as a suspicious person when the average value of errors e is larger than or equal to a threshold.

Note that the processing of the second specifying unit 154 is not limited to the above-described processing, and a person ID of a suspicious person may be specified by executing the following processing. Referring to the movement route table 144, the second specifying unit 154 calculates an "error" for each person ID in each column. The second specifying unit 154 calculates a difference between the prediction in the column at time tn-1 and the movement amount in the column at time tn as an error. The second specifying unit 154 specifies, as a person ID of a suspicious person, a person ID for which the error is larger than or equal to a predetermined difference at a time within a predetermined period from the reference time at which the specific event has occurred.

The processing of the second specifying unit 154 will be described with reference to FIG. 7. In FIG. 7, the reference time at which the person corresponding to the attribute "police officer" is first detected is "time t2". Here, the second specifying unit 154 specifies person ID "101" as a person ID corresponding to a suspicious person, because an error corresponding to the person ID "101" is larger than or equal to a predetermined error at time t3, which is a time within a predetermined period from the reference time. For example, the second specifying unit 154 may determine whether the error is larger than or equal to the predetermined error depending on whether the sum of the absolute value of the x coordinate and the absolute value of the y coordinate of the error is larger than or equal to the predetermined threshold.

When the suspicious person is specified, the second specifying unit 154 outputs the person ID of the specified suspicious person to the notification unit 155.

When receiving the person ID of the suspicious person from the second specifying unit 154, the notification unit 155 causes a predetermined terminal device to display an alert indicating that the suspicious person has been detected. The notification unit 155 may cause the display unit 130 to display an alert. The notification unit 155 may acquire information on the movement route corresponding to the person ID of the suspicious person from the movement route table 144, and notify the predetermined terminal device of the acquired information. The notification unit 155 may search the video buffer 142 for video data containing the suspicious person, and cause the display unit 130 to display the video data of the suspicious person.

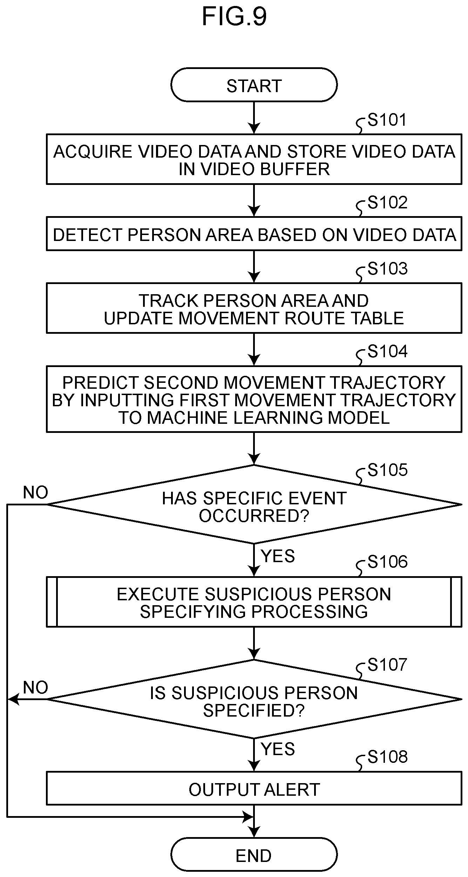

Next, an example of a procedure of processing of the information processing apparatus 100 according to the present embodiment will be described. FIG. 9 is a flowchart illustrating a procedure of processing of the information processing apparatus according to the present embodiment. As illustrated in FIG. 9, the acquisition unit 151 of the information processing apparatus 100 acquires video data and stores the video data in the video buffer 142 (step S101).

The first specifying unit 152 of the information processing apparatus 100 detects a person area based on the video data (step S102). The first specifying unit 152 tracks the person area and updates the movement route table 144 (step S103).

The prediction unit 153 of the information processing apparatus 100 predicts a second movement trajectory by inputting a first movement trajectory to the machine learning model 143 (step S104).

The second specifying unit 154 of the information processing apparatus 100 determines whether a specific event has occurred (step S105). When a specific event has not occurred (step S105, No), the second specifying unit 154 ends the processing.

When a specific event has occurred (step S105, Yes), the second specifying unit 154 executes suspicious person specifying processing (step S106). When the second specifying unit 154 does not specify a suspicious person (step S107, No), the processing ends.

When the second specifying unit 154 specifies a suspicious person (step S107, Yes), the processing proceeds to step S108. The notification unit 155 of the information processing apparatus 100 outputs an alert (step S108).

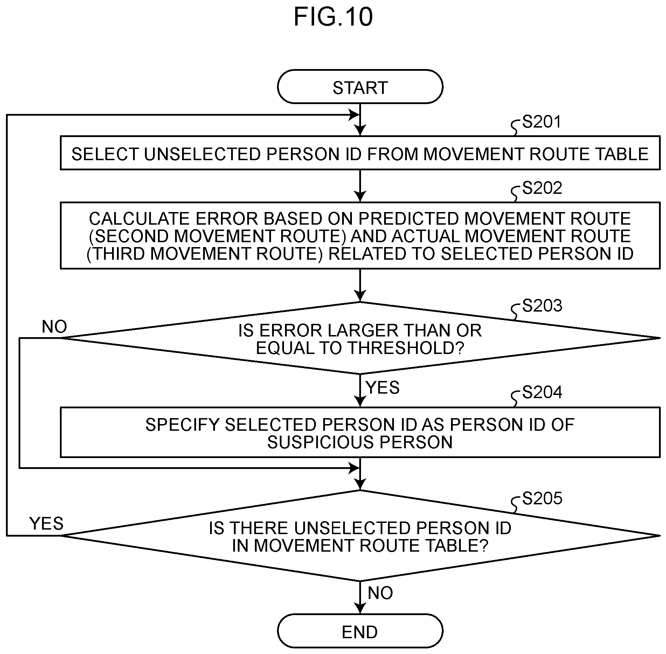

Next, an example of a procedure of the suspicious person specifying processing in step S106 of FIG. 9 will be described. FIG. 10 is a flowchart illustrating a procedure of the suspicious person specifying processing. The second specifying unit 154 of the information processing apparatus 100 selects an unselected person ID from the movement route table 144 (step S201).

The second specifying unit 154 calculates an error based on a predicted movement route (second movement route) and an actual movement route (third movement route) related to the selected person ID (step S202). The second specifying unit 154 determines whether the error is larger than or equal to a threshold (step S203).

When the error is not larger than or equal to the threshold (step S203, No), the second specifying unit 154 proceeds to step S205. On the other hand, when the error is larger than or equal to the threshold (step S203, Yes), the second specifying unit 154 specifies the selected person ID as a person ID of a suspicious person (step S204).

When there is an unselected person ID in the movement route table 144 (step S205, Yes), the second specifying unit 154 proceeds to step S201. When there is no unselected person ID (step S205, No), the second specifying unit 154 ends the suspicious person specifying processing.

### (Modification)

Here, a modification of the information processing apparatus 100 according to the present embodiment will be described. When a suspicious person is specified, the second specifying unit 154 determines whether the specified suspicious person is a person related to a specific event. The second specifying unit 154 makes a determination by inputting video data containing the suspicious person to a machine learning model for human object interaction detection (HOID).

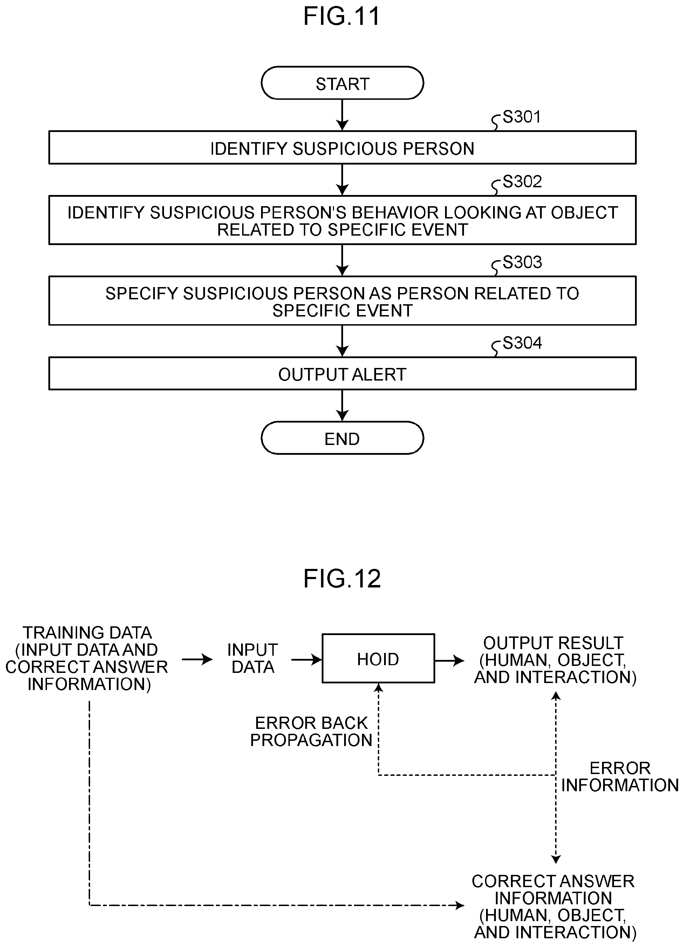

FIG. 11 is a flowchart illustrating a procedure of processing of the information processing apparatus 100 in a modification. The second specifying unit 154 of the information processing apparatus 100 identifies a suspicious person. Specifically, the second specifying unit 154 identifies the suspicious person specified in step S107 (step S301). The second specifying unit 154 identifies the suspicious person's behavior looking at an object related to a specific event. Specifically, the second specifying unit 154 identifies the suspicious person's behavior toward the object by inputting a video containing the specified suspicious person to the machine learning model for HOID (step S302). The second specifying unit 154 specifies the suspicious person as a person related to a specific event (step S303). The notification unit 155 outputs an alert (step S304).

### (HOID Learning Processing)

Here, HOID learning processing will be described. The information processing apparatus 100 generates an HOID on which machine learning has been executed to identify a first class indicating a person, a second class indicating an object, and a first interaction between the first class and the second class.

Each training data includes image data (image frame) that is input data, and correct answer information set for the image data.

In the correct answer information, a class indicating a human to be detected, a class indicating an object (another human), a class indicating an interaction between the human and the object (another human), and a Bbox indicating each class area are set. For example, as the correct answer information, area information of Something class indicating an object, area information of Human class indicating a user, and a relationship indicating an interaction between Something class and Human class are set.

Note that multiple classes and multiple interactions can be set, and the trained HOID can also recognize the multiple classes and the multiple interactions.

In general, when making Something class with normal object recognition, all objects that are not related to a task, such as all backgrounds, clothes, and accessories, are detected. In addition, since they are all something, only a large number of Bboxes are recognized in the image data, and nothing is known. In the HOID, it can be seen that a human has a special relationship with an object (looking at, touching, grasping, etc.), which can be used as meaningful information for the task.

FIG. 12 is a diagram for explaining machine learning of a machine learning model for HOID. The information processing apparatus 100 inputs the input data of the training data to the HOID and acquires an output result of the HOID. The output result includes a class of a human, a class of an object, an interaction between the human and the object, and the like detected by the HOID. Then, the information processing apparatus 100 calculates error information between the correct answer information of the training data and the output result of the HOID, and executes machine learning of the HOID by error back propagation so as to reduce the error.

### (HOID Identification Processing)

Next, HOID identification processing will be described. The second specifying unit 154 of the information processing apparatus 100 specifies an HOID on which machine learning has been executed. Next, the second specifying unit 154 inputs data of each image contained in video data including a suspicious person to the HOID, and acquires an output result of the HOID. The output result of the HOID includes a Bbox of a human, a Bbox of an object (another human), a probability value of interaction between a human and an object (another human), a class name, and the like. Then, the second specifying unit 154 specifies a behavior type based on the output result of the HOID. The second specifying unit 154 identifies a suspicious person's behavior toward an object related to a specific event by using the first class, the second class, and each interaction specified based on the output result. For example, "looking" is specified as the interaction.

When it is determined that a predetermined interaction (looking) occurs between the suspicious person and the object related to the specific event, the second specifying unit 154 of the information processing apparatus 100 specifies the specified suspicious person as a person related to the specific event. The notification unit 155 outputs an alert, assuming that the suspicious person is a person related to the specific event.

That is, by analyzing a video containing a person having a predetermined error between a second movement route and a third movement route, the information processing apparatus 100 determines whether the person having the predetermined error was looking at an object related to a specific event. The information processing apparatus 100 specifies the person having the predetermined error and having looked at the object as a person related to a specific event. As a result, it is possible to improve accuracy in determining whether the specified suspicious person is a person related to a specific event.

Next, the effects of the information processing apparatus 100 according to the present embodiment will be described. The information processing apparatus 100 acquires video data when a specific event has occurred as the video data captured by the camera 10, and predicts a movement route for each person. The information processing apparatus 100 specifies a person having an error larger than or equal to a threshold between the predicted movement route and an actual movement route as a person related to the specific event among a plurality of persons. As a result, a specific person can be specified from the video data.

The information processing apparatus 100 specifies a person having an error larger than or equal to a threshold between a second movement route and a third movement route based on the time at which the specific event has occurred as a suspicious person. As a result, it is possible to specify a suspicious person influenced by the specific event.

For example, the information processing apparatus 100 specifies that a specific event has occurred when a police officer, a drug enforcement officer, or the like is detected. The information processing apparatus 100 specifies a person having an error larger than or equal to a threshold between a second movement route and a third movement route based on the time at which the specific event has occurred as a suspicious person. As a result, it is possible to specify a suspicious person who moves to avoid the police officer, the drug enforcement officer, or the like.

Meanwhile, the processing of the information processing apparatus 100 described above is an example, and the information processing apparatus 100 may execute other processing. Hereinafter, other processing (1), (2), and (3) of the information processing apparatus 100 will be described.

Other processing (1) executed by the information processing apparatus 100 will be described. In a case where a bulletin board (an object related to a specific event) such as a wanted criminal bulletin board or a drug control bulletin board is included in an image frame of video data, the information processing apparatus 100 executes processing on the video data as video data in which the specific event has occurred. In the following description, a bulletin board such as a wanted criminal bulletin board or a drug control bulletin board will be simply referred to as a bulletin board. The information processing apparatus 100 may detect a bulletin board from by analyzing an image from an image frame, or an administrator or the like may set in advance identification information of the camera of which the capturing range includes a bulletin board and a position of the bulletin. For example, in a case where it is set in advance that a bulletin board is set in the capturing range of the camera 10a of the camera identification information "Ca10a", the information processing apparatus 100 executes processing on video data captured by the camera 10a as video data in which a specific event has occurred.

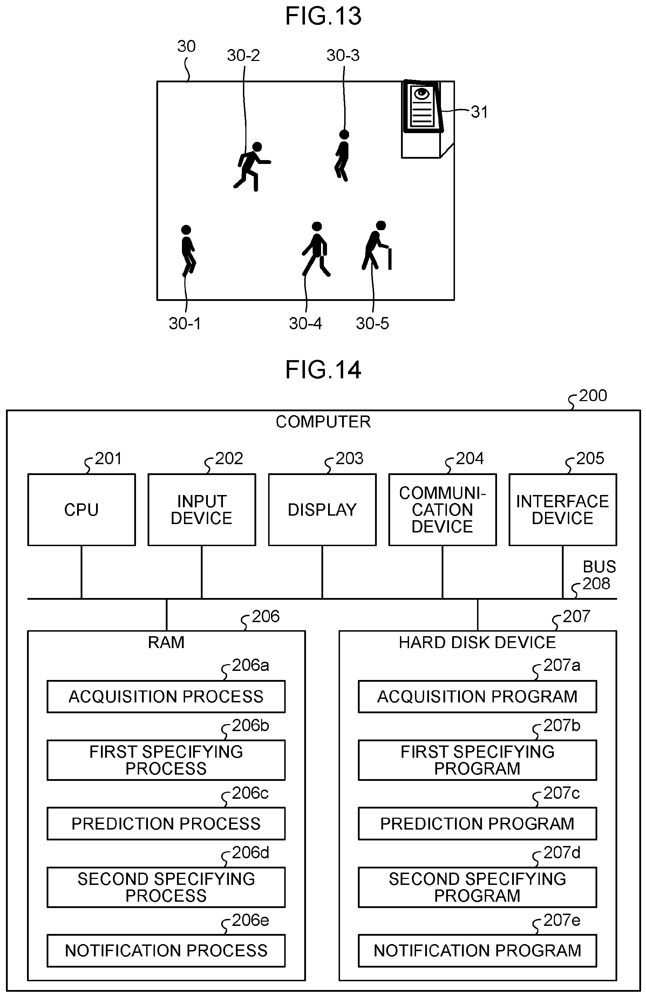

FIG. 13 is a diagram for explaining other processing executed by the information processing apparatus. Here, it is assumed that it is set in advance that a bulletin board is set in the capturing range of the camera 10a of which the camera identification information is "Ca10a". The video data captured by the camera 10a is video data 30. A bulletin board is included in an area 31 of the video data 30. The information processing apparatus 100 calculates errors between predicted movement routes (second movement routes) and actual movement routes (third movement routes) for persons 30-1, 30-2, 30-3, 30-4, and 30-5 included in the video data 30. The processing of specifying the second movement route and the third movement route for each of the persons 30-1 to 30-5 and the processing of calculating the error between the second movement route and the third movement route by the information processing apparatus 100 are similar to those described above.

The information processing apparatus 100 specifies a person ID having an error larger than or equal to a threshold between the second movement route and the third movement route as a person ID of a suspicious person. As a result, it is possible to specify a suspicious person influenced by the bulletin board.

Other processing (2) executed by the information processing apparatus 100 will be described. In a case where a person area of which the attribute is "police officer" is detected from among person areas in video data, the information processing apparatus 100 performs the following processing. The information processing apparatus 100 may perform processing of specifying a person having an error larger than or equal to a threshold between a predicted movement route and an actual movement route as a person related to a specific event among persons included in a range of a predetermined area from the person area of which the attribute is "police officer". Similarly, the information processing apparatus 100 may perform processing of specifying a person having an error larger than or equal to a threshold between a predicted movement route and an actual movement route as a person related to a specific event among persons included in a range of a predetermined area from the bulletin board area. In this manner, by narrowing down the target persons, it is possible to accurately specify a suspicious person while reducing the number of processing targets. For example, a person who is far away from a police officer (or a bulletin board) is less likely to be influenced by the police officer even if the person is a suspicious person because the police officer is not in the suspicious person's field of view.

Other processing (3) executed by the information processing apparatus 100 will be described. The information processing apparatus 100 acquires video data for a period in which an image of an advertisement or the like is displayed on the display of the user terminal. The information processing apparatus 100 extracts an area of each of a plurality of persons from a video during the period in which the image of the advertisement or the like is displayed. Using the extracted area of each of the plurality of persons, the information processing apparatus 100 counts the total number of persons included in the video during the period in which the image of the advertisement or the like is displayed. Then, the information processing apparatus 100 specifies a person having an error larger than or equal to a threshold between a predicted movement route and an actual movement route as a person related to the specific event. The information processing apparatus 100 counts the number of persons related to the specific event during the period in which the image of the advertisement or the like is displayed.

The video data captured by the camera 10a is video data 30. A user terminal is in an area 31 of the video data 30.

The information processing apparatus 100 calculates errors between predicted movement routes (second movement routes) and actual movement routes (third movement routes) for persons 30-1, 30-2, 30-3, 30-4, and 30-5 included in the video data 30. The processing of specifying the second movement route and the third movement route for each of the persons 30-1 to 30-5 and the processing of calculating the error between the second movement route and the third movement route by the information processing apparatus 100 are similar to those described above.

Note that the information processing apparatus 100 specifies the total number of persons included in the video based on the persons 30-1, 30-2, 30-3, 30-4, and 30-5. Furthermore, the information processing apparatus 100 specifies the number of persons related to the specific event from among the persons 30-1, 30-2, 30-3, 30-4, and 30-5 based on the calculated errors. The information processing apparatus 100 outputs, to the display unit 130, information indicating the total number of persons included in the video during the period in which the image of the advertisement is displayed on the display of the user terminal and the number of persons related to the specific event. For example, the information processing apparatus 100 outputs information indicating a ratio of the persons related to the specific event to the total number of persons included in the video. As a result, the degree of influence of the advertisement displayed on the display of the user terminal can be specified.

Next, an example of a hardware configuration of a computer that realizes functions similar to those of the information processing apparatus 100 described above will be described. FIG. 14 is a diagram illustrating an example of a hardware configuration of a computer that realizes functions similar to those of the information processing apparatus according to the embodiment.

As illustrated in FIG. 14, a computer 200 includes a CPU 201 that executes various types of arithmetic processing, an input device 202 that receives an input of data from a user, and a display 203. Furthermore, the computer 200 includes a communication device 204 that transmitting and receiving data to and from the camera 10, an external device, and the like via a wired or wireless network, and an interface device 205. In addition, the computer 200 includes a RAM 206 that temporarily stores various types of information and a hard disk device 207. Each of the devices 201 to 207 is connected to a bus 208.

The hard disk device 207 includes an acquisition program 207a, a first specifying program 207b, a prediction program 207c, a second specifying program 207d, and a notification program 207e. In addition, the CPU 201 reads each of the programs 207a to 207e and develops the read program in the RAM 206.

The acquisition program 207a functions as an acquisition process 206a. The first specifying program 207b functions as a first specifying process 206b. The prediction program 207c functions as a prediction process 206c. The second specifying program 207d functions as a second specifying process 206d. The notification program 207e functions as a notification process 206e.

The processing in the acquisition process 206a corresponds to the processing of the acquisition unit 151. The processing in the first specifying process 206b corresponds to the processing of the first specifying unit 152. The processing in the prediction process 206c corresponds to the processing of the prediction unit 153. The processing in the second specifying process 206d corresponds to the processing of the second specifying unit 154. The processing in the notification process 206e corresponds to the processing of the notification unit 155.

Note that each of the programs 207a to 207e does not need to be stored in the hard disk device 207 from the beginning. For example, each program is stored in a "portable physical medium" such as a flexible disk (FD), a CD-ROM, a DVD, a magneto-optical disk, or an IC card inserted into the computer 200. Then, the computer 200 may read and execute each of the programs 207a to 207e.

### Reference Signs List

- 100: INFORMATION PROCESSING APPARATUS
- 110: COMMUNICATION UNIT
- 120: INPUT UNIT
- 130: DISPLAY UNIT
- 140: STORAGE UNIT
- 141: CAMERA PARAMETER TABLE
- 142: VIDEO BUFFER
- 143: MACHINE LEARNING MODEL
- 144: MOVEMENT ROUTE TABLE
- 150: CONTROL UNIT
- 151: ACQUISITION UNIT
- 152: FIRST SPECIFYING UNIT
- 153: PREDICTION UNIT
- 154: SECOND SPECIFYING UNIT
- 155: NOTIFICATION UNIT

## Claims

1. An information processing program that causes a computer to execute the following processing of:
acquiring a video when a specific event has occurred;
specifying a first movement route of a person in a first period contained in the acquired video;
predicting a second movement route of the person in a second period after the first period based on the first movement route;
specifying an actual third movement route of the person in the second period by analyzing the acquired video; and
specifying a person related to the specific event from the video based on the second movement route and the third movement route.

2. The information processing program according to claim 1, wherein the processing of predicting the second movement route includes predicting the second movement route of the person in the second period after the first period by inputting the first movement route to a first machine learning model.

3. The information processing program according to claim 2, wherein the processing of acquiring the video includes acquiring a video when a first person has appeared in the video or when the video contains a predetermined object.

4. The information processing program according to claim 2 or 3, wherein the processing of specifying the person related to the specific event includes specifying a person having an error larger than or equal to a threshold between the second movement route and the third movement route based on a time at which the specific event has occurred.

5. The information processing program according to claim 2, wherein
the processing of acquiring the video includes acquiring a video when a first person has appeared in the video,
the processing of specifying the first movement route includes specifying a first movement route of a second person in the first period contained in the acquired video,
the processing of predicting the second movement route includes predicting a second movement route of the second person in the second period by inputting the first movement route of the second person to the first machine learning model,
the processing of specifying the third movement route includes specifying an actual third movement route of the second person in the second period contained in the acquired video, and
the computer is caused to further execute processing of outputting the second person as a person to be observed to a display device based on the second movement route and the third movement route.

6. The information processing program according to claim 2, wherein
in a case where a person influenced by a predetermined object is specified,
the processing of specifying the first movement route includes specifying a first movement route of a first person in the first period contained in the acquired video,
the processing of predicting the second movement route includes predicting a second movement route of the first person in the second period by inputting the first movement route of the first person to the first machine learning model,
the processing of specifying the third movement route includes specifying an actual third movement route of the first person in the second period contained in the acquired video, and
the computer is caused to further execute processing of outputting the first person as a person to be observed to a display device based on the second movement route and the third movement route.

7. The information processing program according to claim **1,** wherein
the processing of acquiring the video includes acquiring a video in a period in which a predetermined image is displayed on a display of a terminal, specifying each of a plurality of persons areas contained in the video by analyzing the acquired video, and counting the total number of persons contained in the video in the period in which the predetermined image is displayed on the display of the terminal,
the processing of specifying the person related to the specific event includes specifying second persons each having an error larger than or equal to a threshold between the second movement route and the third movement route, and counting the number of second persons in the period in which the predetermined image is displayed on the display of the terminal, and
the computer is caused to further execute processing of outputting, to a display device, information indicating the total number of persons contained in the video and the number of second persons in the period in which the predetermined image is displayed on the display of the terminal.

8. The information processing program according to claim 1, wherein
the processing of specifying the person related to the specific event includes:
specifying a person having a predetermined error between the second movement route and the third movement route;
determining whether the person having the predetermined error has performed behavior of looking at an object related to the specific event by analyzing a video containing the person having the predetermined error; and
when it is determined that the person having the predetermined error has performed behavior of looking at an object related to the specific event, specifying the person having the predetermined error as the person related to the specific event.

9. The information processing program according to claim 2, wherein
the person related to the specific event is specified by inputting a video containing a person having a predetermined error between the second movement route and the third movement route into a second machine learning model,
the second machine learning model is a human object interaction detection (HOID) on which machine learning is executed to identify a first class indicating a human, a second class indicating an object, and a first interaction between the first class and the second class, and
the processing of specifying the person related to the specific event includes:
inputting a video containing the person having the predetermined error to the HOID and acquiring an output result; and
identifying the person's behavior toward an object related to the specific event by using the first class, the second class, and each interaction specified based on the output result.

10. An information processing method that causes a computer to execute the following processing of:
acquiring a video when a specific event has occurred;
specifying a first movement route of a person in a first period contained in the acquired video;
predicting a second movement route of the person in a second period after the first period based on the first movement route;
specifying an actual third movement route of the person in the second period by analyzing the acquired video; and
specifying a person related to the specific event from the video based on the second movement route and the third movement route.

11. The information processing method according to claim 10, wherein the processing of acquiring the video includes acquiring a video when a first person has appeared in the video or when the video contains a predetermined object.

12. The information processing method according to claim 10 or 11, wherein the processing of specifying the person related to the specific event includes specifying a person having an error larger than or equal to a threshold between the second movement route and the third movement route based on a time at which the specific event has occurred.

13. The information processing method according to claim 11, wherein
the processing of acquiring the video includes acquiring the video when the first person has appeared in the video,
the processing of specifying the first movement route includes specifying a first movement route of a second person in the first period contained in the acquired video,
the processing of predicting the second movement route includes predicting a second movement route of the second person in the second period by inputting the first movement route of the second person to a machine learning model,
the processing of specifying the third movement route includes specifying an actual third movement route of the second person in the second period contained in the acquired video, and
the computer is caused to further execute processing of outputting the second person as a person to be observed to a display device based on the second movement route and the third movement route.

14. The information processing method according to claim 10, wherein
in a case where a person influenced by a predetermined object is specified,
the processing of specifying the first movement route includes specifying a first movement route of a first person in the first period contained in the acquired video,
the processing of predicting the second movement route includes predicting a second movement route of the first person in the second period by inputting the first movement route of the first person to a machine learning model,
the processing of specifying the third movement route includes specifying an actual third movement route of the first person in the second period contained in the acquired video, and
the computer is caused to further execute processing of outputting the first person as a person to be observed to a display device based on the second movement route and the third movement route.

15. An information processing apparatus comprising a control unit that executes the following processing of:
acquiring a video when a specific event has occurred;
specifying a first movement route of a person in a first period contained in the acquired video;
predicting a second movement route of the person in a second period after the first period based on the first movement route;
specifying an actual third movement route of the person in the second period by analyzing the acquired video; and
specifying a person related to the specific event from the video based on the second movement route and the third movement route.

16. The information processing apparatus according to claim 15, wherein the processing of acquiring the video includes acquiring a video when a first person has appeared in the video or when the video contains a predetermined object.

17. The information processing apparatus according to claim 15 or 16, wherein the processing of specifying the person related to the specific event includes specifying a person having an error larger than or equal to a threshold between the second movement route and the third movement route based on a time at which the specific event has occurred.

18. The information processing apparatus according to claim 15, wherein
the processing of acquiring the video includes acquiring the video when a first person has appeared in the video,
in the control unit,
the processing of specifying the first movement route includes specifying a first movement route of a second person in the first period contained in the acquired video,
the processing of predicting the second movement route includes predicting a second movement route of the second person in the second period by inputting the first movement route of the second person to a machine learning model,
the processing of specifying the third movement route includes specifying an actual third movement route of the second person in the second period contained in the acquired video, and
the control unit further executes processing of outputting the second person as a person to be observed to a display device based on the second movement route and the third movement route.

19. The information processing apparatus according to claim 15, wherein
in the control unit,
in a case where a person influenced by a predetermined object is specified,
the processing of specifying the first movement route includes specifying a first movement route of a first person in the first period contained in the acquired video,
the processing of predicting the second movement route includes predicting a second movement route of the first person in the second period by inputting the first movement route of the first person to a machine learning model,
the processing of specifying the third movement route includes specifying an actual third movement route of the first person in the second period contained in the acquired video, and
the control unit further executes processing of outputting the first person as a person to be observed to a display device based on the second movement route and the third movement route.
